# EUROPEAN PATENT APPLICATION

(11) **EP 1 533 678 A1**
(43) Date of publication of application: **25.05.2005**
(21) Application number: 03026896.5
(22) Date of filing: 24.11.2003
(51) Int. Cl.: G06F 1/16, G06F 3/00, A63F 13/02

(54) **Physical feedback channel for entertaining or gaming environments**

(71) Applicant: Sony International (Europe) GmbH, 10785 Berlin (DE)
(72) Inventor: Buchner, Peter Stuttgart Technology Center, Hedelfingerstrasse 61 70327 Stuttgart (DE); Clanget, Ulrich Stuttgart Technology Center, Hedelfingerstrasse 61 70327 Stuttgart (DE); Treiner, Jörg Stuttgart Technology Center, Hedelfingerstrasse 61 70327 Stuttgart (DE); Boucher, Sophie Stuttgart Technology Center, Hedelfingerstrasse 61 70327 Stuttgart (DE)
(74) Representative: Rupp, Christian, Dipl.Phys.

(57) **Abstract**

A physical feedback system for computer gaming environments comprises:
- a computing device for executing an application software program,
   the computing device having an interface for transmitting feedback signals generated by the application software program, and
- a wearable receiver having means for receiving the feedback signals from the computing device and actuator means designed to enter physical feedback sensations to the body and/or head of a user using the skin of the user as an interface.

## Description

### FIELD AND BACKGROUND OF THE INVENTION

The present invention generally relates to the field of providing physical feedback to the user of an application, such as f.e. a computer game or other entertainement application software.

### BRIEF DESCRIPTION OF THE PRESENT STATE OF THE ART

To understand the proposed idea of the present invention, it is necessary to briefly describe the main features, advantages and problems of haptic interfaces and tactile communication systems according to the state of the art.

Haptic interfaces represent an interesting alternative to conventional human-machine interfaces and feature a wide variety of applications. Examples include virtual-reality (VR) applications for immersive simulation, teleoperated master-slave robot systems, and robotic surgery. A haptic interface according to the state of the art comprises a special input/output device (e.g. a force-feedback joystick, a haptic mouse, or an exoskeleton), a real-time controller, and a real-time simulation of a virtual environment. The controller thereby collects information from integrated sensors of the input/output device (e.g. position, velocity, force or torque sensors), which are then used as input information to the simulation. The simulation estimates the forces a user should feel based on this input information and the internal state of the simulation itself. The simulation outputs are then used by the controller to drive the input/output device's actuators, which allows said user to touch, feel, and manipulate virtual environments.

WO 01/41636 A1 refers to a tactile communication system enabling remotely control of tactile output devices, e.g. motor actuators, which are used for a sensory/tactile stimulation of human muscles, limbs, and body joints by vibrations, warmth electromagnetic pulses, etc.

WO 98/14860 pertains to a method for transmitting the touch of a sensor array via a computer or computer network and a corresponding system for transmitting perceptible feelings, which comprises at least one computer, a sensor array for detecting touches from a person and providing sensor signals, an actuator array for generating physically perceptible pressure signals, and a control unit linking the sensor array and the actuator array to the computer.

In EP 0 875 821 A2, a communication terminal device with a tactile feedback is described. The device comprises a peninput tablet, a microphone, an acceleration sensor and a number of pressure sensors.

A computerized system including a touch-/pressure-sensitive transducer and a computer responsive thereto for producing a sentic cycle and recording touch expression is disclosed in US 5,305,423.

### PROBLEMS OF PRIOR-ART SOLUTIONS

Today, entertainment and gaming software such as e.g. adventure games are getting more and more realistic due to a more and more enhanced graphical resolution and frame rate. Modern game console platforms are also used in combination with hand-held controller devices providing a haptic force-feedback function. However, these force-feedback controller devices according to the state of the art do not provide a realistic way of feeling tactile sensations in virtual game scenarios.

### OBJECT OF THE PRESENT INVENTION

In view of the explanations mentioned above, it is the object of the present invention to provide a controlling device which allows a more realistic (intuitive) feedback.

This object is achieved by means of the features of the independent claims. Advantageous features are defined in the subordinate claims. Further objects and advantages of the invention are apparent in the detailed description which follows.

### SUMMARY OF THE INVENTION

A system providing realistic physical feedback in a computer gaming environment according can comprise:
- a computing device for executing an application software program,
   the computing device having an interface for transmitting feedback signals generated by the application software program, and
- a wearable receiver having means for receiving the feedback signals from the computing device and actuator means designed to enter physical feedback sensations to the body and/or head of a user using the skin of the user as an interface.

The wearable reveicer can be integrated in a piece of garment.

A display can be integrated into the piece of garment.

The wearable receiver can comprise a controller for controlling an array of actuators according to an operational pattern depending on any feedback signal received.

The sytem furthermore can comprise a channel for transmitting signals representing biological data from the user to the computing device hosting the application software program.

The application software can be an entertainement or game-type software.

The feedback signals can be generated depending on a background scene and/or a virtual actor of a game-type software.

The application software can be divided into several logical parts, wherein each part is associated with a channel of the feedback signals and each channel is associated with a respective subgroup of the actuator means.

The actuator means can comprise means for generating vibrational, tactile an/or heat.

The wearable receiver can comprise means for adjusting manually operational parameters of the actuator means.

According to another aspect of the present invention, a method for providing physical feedback sensations to the body of a user of an application software program can comprise the following steps:
- generating feedback signals in an application software program,
- transmitting the feedback signals to a wearable receiver, and
- entering, based on the received feedback signals, physical feedback sensations to the body and/or head of a user using the skin of the user as an interface.

Another aspect relates to computer program product, a computer game console and a wearable game accesory respectively supporting such a method.

### BRIEF DESCRIPTION OF THE DRAWINGS

Further advantages and conceivable applications of the present invention result from the subordinate claims as well as from the following description of one embodiment of the invention as depicted in the following drawings:
- Fig. 1: shows a user wearing a piece of clothing which includes integrated actuators for generating vibrations, heat or coolness, pressure and/or electric pulses generated by actuators worn on or placed near the user's body,
- Fig. 2: block diagram showing the interaction between biometric sensors placed on or close to the body of a person wearing said piece of clothing, a game console platform and its controlling unit,
- Fig. 3a: shows a piece of clothing (e.g. a shirt) comprising a wearable display,
- Fig. 3b: shows a piece of clothing (e.g. a shirt) comprising a wearable display which shows a simulated heavy violation by coloring parts of said shirt red,
- Fig. 4a: illustrates a tactile communication scenario according to a first embodiment of the invention, and
- Fig. 4b: illustrates a tactile communication scenario according to a second embodiment of this invention,

### DETAILED DESCRIPTION OF THE PRESENT INVENTION

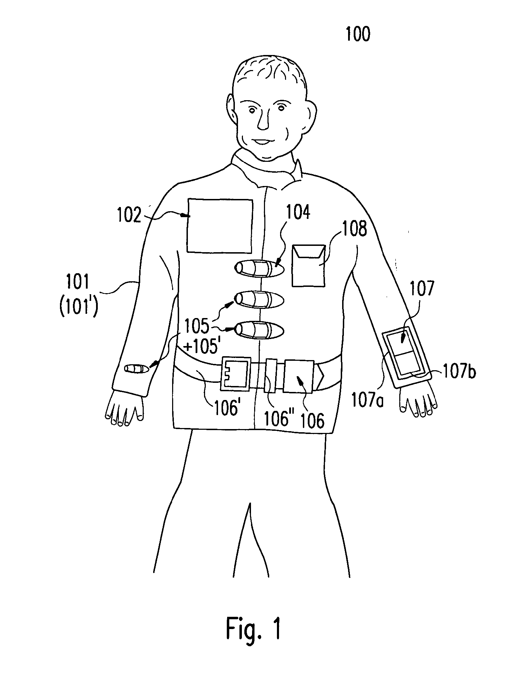

In the following, different embodiments of the present invention as depicted in Figs. 1 to 4b shall be explained in detail. The meaning of the symbols designated with reference numerals and signs in these figures can be taken from an annexed table.

The present invention particularly refers to a piece of clothing or wearable accessory 101 equipped with at least one wearable computing device 100, wherein the computing device is connected to the central controlling unit 109" e.g. of a game console application 109' or any type of application software running on an external controlling device 109 over a wireless or wirebound link 199. It comprises means (100C) for receiving (S202') and processing (S202'') e.g. digitally encoded control information representing physical feedback singals from the external controlling device 109, actuating means 106a-d placed on or close to the body of a person wearing said piece of clothing or wearable accessory 101, which generate multi-sensorial feedback e.g. from a virtual gaming scene by generating (S104') visual, auditive, tactile, gustatoric and/or olfactoric stimuli, particualrly stimuli using the skin of a user as an interface, as well as means (206) for activating, controlling and deactivating (S104) these actuating means 106a-d according to said control information.

The central controlling unit can be connected operatively with a monitor device, as it is well known f.e. from game consoles, to transmit and eventually receive signals from the monitor device.

According to a further aspect of the invention, said device 100 features a tactile interface 103 which comprises different sensing means 105a-c for detecting tactile input information when being touched by a user and/or a number of actuating means 106a-d for generating (S104') tactile stimuli, which provides said user with sensoric feedback f.e. from a virtual gaming scene according to said control information.

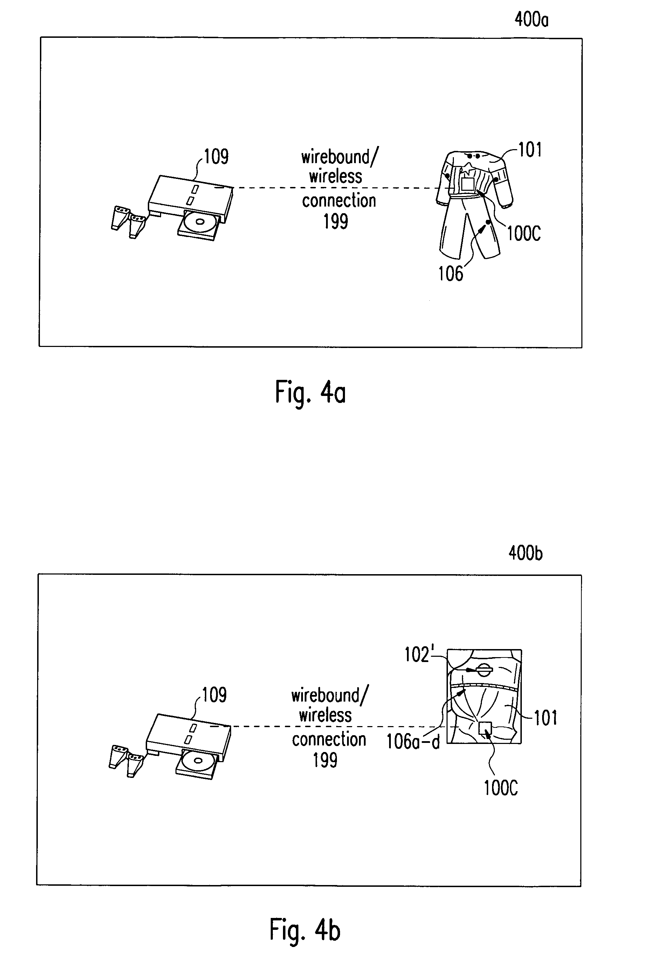

According to a first embodiment of the invention as depicted in Fig. 4a, tactile stimulation is achieved by means of a dedicated piece of clothing equipped with one or a number of the same or different types of mechanical and/or electric actuators 106a-d (e.g. micro motors, micro speakers, piezo elements, micro fans and electrostatic discharge modules for simulating e.g. "laser shocks", etc.). Said actuators are embedded into a piece of clothing 101 or into a part of said clothing worn by the player, wearable accessories or intelligent jewelries that are preferably worn on the upper part of the person's body or on his/her arms. To get a more realistic impression of the gaming atmosphere (displayed on the monitor device), simulated environmental conditions such as wind, rain or heat become feelable to said player. The intensity of simulated tactile sensations, which is under main control of the game console application software and also controlled by different controlling means which are directly controllable by the player, depends on the number of worn clothing layers. The game console application 109' is usually responsible for controlling only a single actuator 106 or a number of actuators 106a-d at a time and works according to a predefined set of rules.

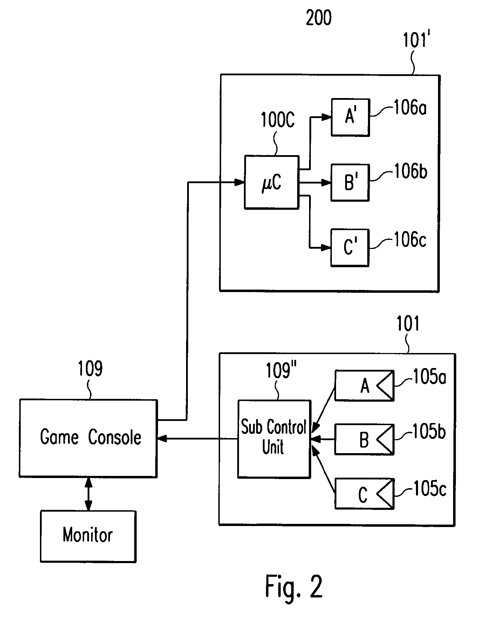

As shown in Figs. 1 and 2, in addition to the signals originating from the game console, furthermore feedback data from the player, detected by a number of biometric (105a-c) and/or environmental sensors (105') placed on or close to the user's body can also be used to influence the game console application software. The sensors are used for measuring e.g. the skin conductivity, which indicates the degree of sweating, body temperature, blood volume pressure, respiration and/or pulse rate (and therewith the excitement level) of the player or several environmental conditions (e.g. the temperature, atmospheric pressure, relative humidity and/or wind speed) in the environment of said person, respectively.

There are usually different types of visual or audio information conveyed to the user. Possible categories are:
(1) information regarding the atmosphere, e.g. via the rhythm of music indicating danger,
(2)information about what the main character in a virtual game scenario shown on the monitor is doing (e.g. jumping or firing), and
(3)information related to other characters such as enemies and partners of the main character. These different categories of information (background, main and foreground information) can be conveyed by different types of actuators (acoustic, optical, haptic actuators or special actuators that generate signals stimulating a player's gustatoric or olfactoric sense) to represent different levels of information to the user. For each category, the intensity of a signal can be varied.

The controlling unit 100C of a wearable computing device 100 integrated into the player's clothes thereby acts as a wireless or wired link between the actuators 106a-d and the game console platform 109. Besides conventional wireless standards such as Bluetooth, ZigBee or IEEE 802.11b WLAN technology, high-speed fixed network connections such as Ethernet, USB or 1394 can also be supported.

A second embodiment of the present invention as depicted in Fig. 4b is based on an active wearable device 100 driven by e.g. a game console platform 109 which targets a relaxing stimulation of a person wearing a piece of clothing 101 including such an embedded active wearable device 100. This device comprises at least one haptic interface 103 and/or a number of sensors 105a-c and actuators 106a-d placed on or close to a user's body (e.g. on the neck, shoulders and/or arms of said person), which are used for sensing tactile input information, monitoring his/her physiological, physical and/or psychological condition (which especially includes physical expressions of affection reflecting the player's feelings, emotional states or states of mind) and generating different types of stimulation (e.g. heat, pressure, vibrational and/or electric pulses, etc.) based on this information, respectively. In this connection, so-called "relax software titles" are needed which are specially designed to control the actuators in a way that is being received by said person as a tactile sensation and/or relaxing stimulation. The software for running the haptic interface 103 can also be supported by relaxing music, video or graphical scenes. Also conceivable is a combination of the first and said second embodiment.

A third embodiment of the present invention is directed to an interactive tactile communication scenario, wherein wearable computing devices of at least two players, each wearing a piece of clothing as described above and having a communication platform (i.e. a game console or PC) with the appropriate interfaces and application software, are interconnected via a wireless or wired network link. Thereby, a number of biometric (110c) and/or environmental signals (110c') indicating the physical condition, emotional states and/or states of mind of a first person wearing a first piece of clothing 101 equipped with a first wearable computing device 100 and/or tactile sensations perceived by said first person are continuously (or intermittently) sensed and monitored (S100).

After having extracted (S101) a number of features from said biometric (110c) and/or environmental signals (110c'), these features are analyzed (S102) and mapped (S103) to a number of emotional patterns (meta information), that are stored in an integrated read access memory (RAM) for further processing. This meta information is then transmitted (S201) to a second person wearing a second piece of clothing 101' equipped with at least one further wearable computing device 100' for receiving (S202) and reproducing (S104) tactile sensations perceived and/or physical affection expressed by said first person. The application software thereby allows a "remote touch" by opening an e.g. Internet-based "tactile remote control" connection between the two players. Each player can alternatively select to control the distant wearable device of his/her counterpart or his/her own wearable device. Therefore, the application software provides predefined patterns for a mutual tactile stimulation and also enables the users to create their own individual "remote touch" patterns or sequences. In case of an online connection, real-time entertaining is available; for non-real-time operation the provision of an email interface to drive the "remote touch" scenario is also possible. Finally, it should be mentioned that this embodiment can advantageously be combined with said first and/or said second embodiment described above.

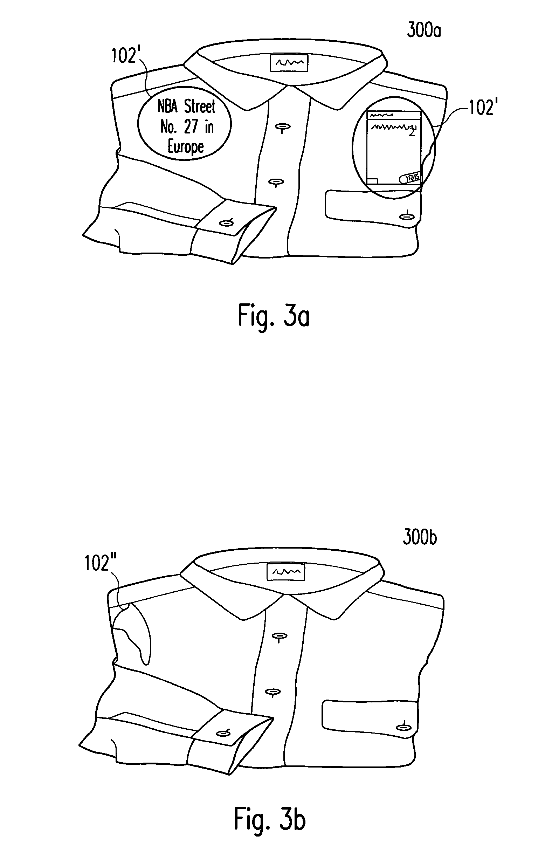

In addition to the haptic interface 103, a user can also wear a piece of clothing 300a/b (e.g. a shirt) that comprises optical fibers and/or any other type of wearable optical displays 102, 102' or 102''. These displays can e.g.
- show the name and/or logo of an interactive network game or display the current high-score rank of a player participating in said game and/or any other game-related information (cf. Fig. 3a),
- show a simulated heavy violation by using integrated optical fibers for coloring parts of said shirt red (cf. Fig. 3b), or
- display relaxing images, images reflecting emotional states of a user wearing said piece of clothing - e.g. in the form of emoticons ("smileys", e.g. ":-)", ":- -", or ":-(", etc.) or other symbols and signs - or any other type of visual information (cf. Fig. 1a).

According to a further aspect of the invention, the haptic interface 103 additionally comprises actuators 106a-d which are used for generating low-frequency vibrations or acoustic signals making the player feeling tired, stressed or unconcentrated and simulating physical strain.

**Table:**

| **Depicted Features and their Corresponding Reference Signs** | |
|---|---|
| No. | Technical Feature (System Component or Procedure Step) |
| 100 | wearable computing device, integrated into a first piece of clothing 101 (e.g. a smart jacket) or any type of wearable accessory such as watches, wrist or arm bracelets, rings, brooches, etc. (so-called "digital jewelry"), comprising actuators transmitting feedback-information using the skin of a user as an interface for entering informational sensation to the body of the user, |
| 100' | wearable computing device, integrated into a second piece of clothing 101' worn by a second user |
| 100" | wearable computing device, |
| 100C | central controlling unit (µC) of the wearable computing device 100 |
| 100C' | central controlling unit (µC') of the wearable computing device 100' |
| 100T | transmitting means of the wearable computing device 100, |
| 100R' | receiving means of the wearable computing device 100' for wirelessly receiving information |
| 100T' ' | transmitting means of the wearable computing device 100", that is used for wirelessly transmitting information |
| 100R' ' | receiving means of the wearable computing device 100 " for wirelessly receiving information |
| 100a | diagram showing a user wearing a piece of clothing 101 which includes a number of integrated electronic devices for monitoring tactile sensations, emotional states and/or the state of mind of the user, analyzing said feelings and combining vibrational, heat, pressure or electric pulses generated by actuators 106a-c worn on and/or placed near the user's body for stimulating said user |
| 100b | block diagram showing the feature extraction and tactile stimulation procedure according to the present invention |
| 101 | first piece of clothing (e.g. a smart jacket) equipped with at least one wearable computing device as described above, worn by a first person, |
| 101' | second piece of clothing (e.g. a smart jacket) equipped with at least one further integrated wearable computing device, worn by a second person, that is specially adapted to receive digitally encoded information from said first piece of clothing or wearable accessory 101 |
| 102 | liquid crystal display (LCD), incorporated into the upper right front part of the piece of clothing 101, that is used e.g. to display relaxing images, images reflecting emotional states of a person wearing said piece of clothing 101 - e.g. in the form of emoticons ("smileys", e.g. ": -)" , ": -\|" , ": -(" , etc.) or other symbols and signs - or any other type of visual information |
| 102' | wearable display, embedded into a piece of clothing 300a (e.g. a shirt), which displays the name and/or logo of an interactive network game, the current high-score rank of a player participating in said game, game-related and/or any other type of textual and/or visual information |
| 102" | wearable display, embedded into another piece of clothing 300b (e.g. a shirt), which displays a simulated heavy violation by using integrated optical fibers made of quartz glass and/or plastics for illuminating and/or coloring parts of said shirt red |
| 103 | tactile interface, integrated into said piece of clothing 101, which is used for sensing tactile input information, monitoring a user's physiological, physical and/or psychological condition and generating heat, pressure, vibrational and/or electric pulses or other types of stimulation based on this tactile input information, physical or mental strain of said user and/or context information provided by applications running on a game console 109 |
| 104 | smart button for buttoning up said jacket 101, which can also be used for activating or deactivating an integrated function allowing the wearer of said jacket 101 e.g. to listen his/her favorite music stored on an integrated microchip, tune into his/her favorite radio channel, display moving images on the liquid crystal display 102, activate or deactivate integrated heating elements, etc. |
| 105, 105a-c | different biometric sensors (body temperature, blood volume pressure, skin conductivity, respiration rate and/or pulse rate sensors, etc.) for monitoring a number of biometric signals indicating the physical condition and excitement level of a user wearing the jacket 101, |
| 105' | different meteorological sensors 105' (e.g. thermometer, barometer, hygrometer and/or wind speed meter) indicating different climatic and/or meteorological conditions (temperature, atmospheric pressure, relative humidity and wind speed) in the environment of said user |
| 106, 106a-d | actuating means (micro motors, micro speakers, piezo elements, heating elements and micro fans or electrostatic discharge modules, etc.) for generating vibrations, acoustic signals, heat or coolness, pressure or electric pulses stimulating the user, which are integrated e.g. into the waist belt of the user's smart jacket 101 |
| 106' | processing means for extracting (S101) features from biometric signals taken from a user wearing said jacket 101, which indicate the physical condition of said user, and/or measured meteorological parameters in the environment of the user, analyzing (S102') user inputs by evaluating oral and/or written user statements and signs (e.g. Internet or SMS emoticons such as ": -) ", ": - \| ", or ": - (" typed in on an integrated keyboard 107a of a user's smart jacket 101), which reflect perceived sensations of said user, mapping (S103) the results of this analysis to emotional patterns stored in a read access memory (RAM) and using these patterns for activating/deactivating (S104) at least one of the available actuators 106a-d that are integrated into the piece of clothing 101 for stimulating the wearer's energy level, said processing means being integrated e.g. into the waist belt of the user's smart jacket 101 |
| 106" | battery pack, integrated into the waist belt of the user's smart jacket 101 |
| 107 | control display, integrated into the left sleeve of the user's smart jacket 101 |
| 107a | keyboard for inputting user and control information needed for controlling said control display 107, integrated into the left sleeve of said jacket 101 |
| 107b | "JogDial" button, integrated into the left sleeve of said jacket 101, which gives a rundown on the user's physical performances after a sporting activity |
| 108 | fake pocket, integrated into the upper left front part of said user's jacket 101, which includes a digital pocket storage |
| 109 | game console platform, driving the haptic interface 103 of a wearable computing device 100 integrated into a piece of clothing 101 or any other type of wearable accessory |
| 109' | game console application, running on said game console 109 |
| 109" | controlling unit of the game console application, used for controlling the haptic interface 103 of the wearable computing device 100 or a number of different sensors 105, 105' and actuators 106a-d placed on or close to said user's body |
| 110a | signs (e.g. Internet or SMS emoticons such as ":-)", ":\|", or ":-(" typed in on an integrated keyboard 107a of the user's smart jacket 101), that reflect perceived sensations and/or emotional states of a user wearing said jacket |
| 110b | written statements and/or spoken utterances reflecting tactile sensations and/or emotional states perceived by a user wearing said jacket |
| 110c | biometric signals indicating the physical condition of a user's body, detected by different biometric sensors 105 (e.g. body temperature, blood volume pressure, respiration rate and/or pulse rate sensors) integrated into the piece of clothing 101 worn by said user |
| 110c' | environmental signals indicating climatic and/or meteorological conditions (e.g. temperature, atmospheric pressure, relative humidity, and/or wind speed) in the environment of said user, detected by different meteorological sensors 105' (e.g. thermometer, barometer, hygrometer, and wind speed meter) |
| 112 | literally, lexically and syntactically analyzed and semantically interpreted written statement typed in on an integrated keyboard 107a of the piece of clothing 101 or phonetically, lexically and syntactically analyzed and semantically interpreted spoken utterance of a user wearing said jacket 101 ("feeling language statement"), which reflects expressed feelings of said user |
| 114 | vibrations, heat or coolness, pressure and/or electric pulses generated by actuators worn on and/ or placed near the user's body for stimulating the user depending on the perceived and analyzed sensations of said user |
| 300a | piece of clothing (e.g. a shirt) comprising a wearable display which shows the name or logo of an interactive network game or displays the current high-score rank of a player participating in said game and/or any other gamerelated information |
| 300b | piece of clothing (e.g. a shirt) comprising a wearable display which shows a simulated heavy violation by coloring parts of said shirt red |
| 400a | tactile communication scenario according to a first embodiment of the present invention ("Shock U"), wherein a wearable computing device 100 comprising at least one haptic interface 103 or a number of actuators 106a-d placed on or close to a user's body, which are used for generating different types of stimulation (e.g. heat, pressure, vibrational and/or electric pulses), is controlled by the controlling unit 109" of a game console platform 109 |
| 400b | tactile communication scenario according to a second embodiment of this invention ("Relax U"), wherein a wearable computing device 100 - comprising at least one haptic interface 103 or a number of sensors 105a-c and actuators 106a-d placed on or close to a user's body, that are respectively used for sensing tactile input information, monitoring his/her physiological, physical and/or psychological condition (which especially includes physical expressions of affection reflecting said user's feelings, emotional states and/or states of mind) and generating different types of stimulation (e.g. heat, pressure, vibrational and/or electric pulses, etc.) based on this input information, physical or mental strain of the user is controlled by the controlling unit 109" of the game console platform 109 |
| S100 | step #100: sensing and monitoring different biometric signals (e.g. body temperature, blood volume pressure, respiration rate and/or pulse rate) indicating the physical condition of a person wearing said jacket 101 |
| S100' | step #100': measuring meteorological parameters (e.g. temperature, atmospheric pressure, relative humidity and/or wind speed) indicating climatic and meteorological conditions in the environment of said user |
| S101 | step #101: extracting features from biometric signals taken from a user wearing said jacket 101, which indicate the physical condition of said user, and/or measured meteorological conditions in the environment of said user |
| S102 | step #102: analyzing these features |
| S102' | step #102': analyzing user inputs by evaluating oral and/or written user statements and signs (e.g. Internet or SMS emoticons such as ": - ) ", ": - \| ", or ":-(" typed in on an integrated keyboard 107a of a user's smart jacket 101), which reflect perceived sensations of the user |
| S103 | step #103: translating these signals into a "feeling language statement", that reflects perceived sensations and/or emotional states of said user, by mapping results of this analysis to a number of emotional patterns (meta information) stored in a read access memory (RAM) |
| S104 | step #104: using these patterns for activating or deactivating at least one of the available actuators 106a-d integrated into the piece of clothing 101 for stimulating a user's energy level |
| S104' | step #104': continuously or intermittently generating visual, auditive, tactile, gustatoric and/or olfactoric stimuli based on digitally encoded control information received from an external controlling unit 109" via a wireless or wired link |
| S201 | step #201: transmitting meta information from a first person wearing a first piece of clothing 101 equipped with at least one integrated wearable computing device to a second person wearing a second piece of clothing 101' equipped with at least one further integrated wearable computing device for receiving said meta information, evaluating and reproducing feelable signals, tactile sensations perceived and/or physical affection expressed by said first person |
| S202 | step #202: receiving meta information representing feelable signals, tactile sensations perceived and/or physical affection expressed by a first person wearing a first piece of clothing 101 equipped with at least one integrated wearable computing device |
| S202' | step #202': receiving digitally encoded control information received from an external controlling unit 109" via a wireless or wired link |
| S202' | step #202'': processing this control information |
| S301 | step #301: character scan procedure for automatically recognizing characters, numbers and/or symbols typed in on the integrated keyboard 107a of said smart jacket 101 |
| S301' | step #301': phonetic scan procedure for automatically recognizing the phonemes in a spoken utterance of a person wearing this piece of clothing 101 |
| S302 | step #302: lexical scan procedure for automatically recognizing feeling language tokens belonging to a "feeling language vocabulary" reflecting perceived sensations and/ or emotional states of a user wearing said jacket |
| S303 | step #303: syntax scan procedure for analyzing the grammatical structure of a recognized "feeling language statement" |
| S304 | step #304: semantic scan procedure for interpreting expressed feelings by performing a semantic analysis of this recognized and syntactically analyzed feeling language statement |
| S401 | step #401: searching the read access memory (RAM) integrated into the wearable computing device of the first piece of clothing 101 worn by said first person, which serves as a repository for meta information representing feelings, tactile sensations perceived and/or physical affection expressed by said first person |
| S401' | step #401': selecting a pattern dependent on an interpretation of a tactile sensation perceived or a feeling expressed by said first person gained by a literal and/or phonetic, lexical, syntactical and semantic analysis of a statement typed in on an integrated keyboard 107a of said first piece of clothing 101 and/or a spoken utterance of said first person wearing this particular piece of clothing 101, respectively |
| S402 | step #402: enriching or updating the UPF pattern descriptors 600 of said patterns with additional information derived from available context information provided by a number of different biometric (105) and/or environmental sensors (105') integrated into the first piece of clothing 101 worn by said first person |

## Claims

1. A system comprising:
- a computing device for executing an application software program,
the computing device having an interface for transmitting feedback signals generated by the application software program, and
- a wearable receiver having means for receiving the feedback signals from the computing device and actuator means designed to enter physical feedback sensations to the body and/or head of a user using the skin of the user as an interface.

2. A system acording to claim 1,
**characterized in that**
the wearable receiver is integrated in a piece of garment.

3. A system according to claim 2,
**characterized in that**
a display is integrated into the piece of garment, wherein the display is designed to react to the feedback signals from the computing device.

4. A system according to anyone of the preceding claims,
**characterized in that**
the wearable receive comprise a controller for controlling an array of actuators according to an operational pattern depending on any feedback signal received.

5. A system according to anyone of the preceding claims,
**characterized in that**
it furthermore comprises a channel for transmitting signals representing biological data from the user to the computing device hosting the application software program.

6. A system according to anyone of the preceding claims,
**characterized in that**
the application software is an entertainement or game-type software.

7. A system according to claim 6,
**characterized in that**
the feedback signals are generated depending on a user or application context.

8. A system according to claim 7,
**characterized in that**
the feedback signals are generated depending on a background scene, defined virtual objects, sounds, colors and/or a virtual actor generated by a game-type software.

9. A system according to any of the preceding claims,
**characterized in that**
the application software is designed to display scenes on the monitor, wherein different elements of the scenes displayed are respectively associated with a channel of the feedback signals and each channel is associated with a respective subgroup of the actuator means.

10. A system according to anyone of the preceding claims,
**characterized in that**
the actuator means comprise means for generating vibrational, tactile an/or heat stimuli.

11. A system according to anyone the preceding claims,
**characterized in that**
the wearable receiver comprises means for adjusting manually operational parameters of the actuator means.

12. A method for providing physical feedback sensations to the body of a user of an application software program, the method comprising the following steps:
- generating feedback signals in an application software program,
- transmitting the feedback signals to a wearable receiver, and
- entering, based on the received feedback signals, physical feedback sensations to the body and/or head of a user using the skin of the user as an interface.

13. A method according to claim 12,
**characterized in that**
an array of actuators is controlled according to an operational pattern depending on any feedback signal.

14. A method according to claims 12 or 13,
**characterized in that**
signals representing biological data from the user are transmitted to the computing device hosting the application software program for further processing.

15. A method according to any of claims 12 to 14,
**characterized in that**
the feedback signals are generated depending on a background scene, defined virtual objects, sounds, colors and/or a virtual actor genrerated by a game-type software.

16. A method according to any of claims 12 to 15,
**characterized in that**
the application software is divided into several logical parts, wherein each part is associated with a channel of the feedback signals and each channel is associated with a respective subgroup of the actuator means.

17. A method according to anyone of claims 12 to 16,
**characterized in that**
the actuator means comprise means generating vibrational, tactile an/or heat stimuli to a user.

18. A computer program product,
supporting a method according to claims 12 to 17 when running on a computing device.

19. A computer game console,
designed to support a method according to any of claims 12 to 17.

20. A wearable game accesory,
comprising a controller supporting a method according to any of claims 12 to 17.
